# EUROPÄISCHE PATENTSCHRIFT

(11) **EP 0 928 388 B1**
(45) Veröffentlichungstag und Bekanntmachung des Hinweises auf die Patenterteilung: **12.03.2003**
(21) Anmeldenummer: 97944728.1
(22) Anmeldetag: 22.09.1997
(51) Int. Cl.: F16K 31/04

(54) **VENTIL EINER TURBINE**
TURBINE VALVE
CLAPET DE TURBINE

(30) Priorität: 26.09.1996 DE 19639721
(43) Veröffentlichungstag der Anmeldung: 14.07.1999
(73) Patentinhaber: SIEMENS AKTIENGESELLSCHAFT, 80333 München (DE)
(72) Erfinder: STEINBORN, Richard, D-51377 Leverkusen (DE)
(86) Internationale Anmeldenummer: DE9702140
(87) Internationale Veröffentlichungsnummer: WO98013633

(56) Entgegenhaltungen:
- DE-A- 2 742 219
- DE-A- 3 236 293
- DE-A- 4 446 605
- GB-A- 2 030 241
- US-A- 4 613 798

## Beschreibung

Die Erfindung bezieht sich auf ein Ventil einer Turbine, dessen Öffnungsposition mittels einer Schubstange einstellbar ist.

Eine Turbine, insbesondere eine Dampfturbine, weist üblicherweise eine beträchtliche Anzahl von Ventilen auf, die beispielsweise als Frischdampf-, Abfang- oder Umleitventile zum Einsatz kommen können. Die Öffnungsposition jedes dieser Ventile dient dabei zur Einstellung eines jeweiligen Materialoder Dampfstromes und ist in der Regel über ein dem jeweiligen Ventil zugeordnetes Übertragungsglied einstellbar. Das Übertragungsglied ist jeweils Teil eines dem Ventil zugeordneten Stellantriebes. An den Stellantrieb sind dabei insbesondere im Hinblick auf Stellkraft und Stellgeschwindigkeit hohe Anforderungen zu stellen.

Die Ventile sind daher üblicherweise als ölhydraulisch betriebene Stellventile ausgelegt, wobei die ihnen zugeordneten Stellantriebe jeweils eine ölhydraulische Einrichtung umfassen. Zum Betrieb der Stellantriebe und somit der Ventile kann beispielsweise ein zentrales hydraulisches Versorgungssystem vorgesehen sein. Für ein derartiges zentrales hydraulisches Versorgungssystem ist jedoch ein komplexes und somit aufwendiges Rohrleitungssystem erforderlich, das für eine hohe Betriebssicherheit auch redundant ausgeführt sein sollte. Zur Vereinfachung eines derartigen komplexen Versorgungssystems sind aus der Europäischen Patentanmeldung EP-0 040 732-A1 und aus dem Aufsatz W. Kindermann, E. G. Egener und H. Termühlen, "Compact Valve Actuator Control System for Large Steam Turbines", vorgetragen auf der American Power Conference, Chicago, 1984, Stellantriebe für Dampfturbinenventile bekannt, die jeweils ein dezentrales Hydrauliksystem aufweisen. Das Hydrauliksystem eines derartigen Stellantriebes ist zu einem am Ventilgehäuse angeordneten kompakten Antriebsblock integriert, so daß für eine Energieversorgung des Stellantriebes lediglich noch ein Kabelsystem erforderlich ist.

Auch bei dieser Ausführung eines Stellantriebes für ein Ventil einer Dampfturbine ist jedoch, ebenso wie bei einem zentralen hydraulischen Versorgungssystem, die Verwendung von Öl als Hydraulikflüssigkeit vorgesehen. Die Verwendung von Öl in einer Dampfturbine birgt jedoch grundsätzlich eine Brandgefahr in sich. Im Hinblick auf den Brandschutz können zwar als Hydraulikflüssigkeit auch schwer brennbare Flüssigkeiten eingesetzt werden. Derartige schwer brennbare Hydraulikflüssigkeiten sind jedoch kostspielig und erfordern aufgrund ihrer im Vergleich zu Hydraulikflüssigkeiten auf Mineralölbasis geringeren Stabilität aufwendige Pflegemaßnahmen.

In der DE-OS 19 37 198 ist ein Regelventil für die Regelung des Drucks und/oder der Menge von einem strömenden Medium in Kraftwerken, chemischen Anlagen oder dergleichen beschrieben. Das Regelventil weist eine Schubstange auf, an der ein Ventilsitz befestigt ist. Die Schubstange ist über einen um einen zentralen Drehpunkt drehbaren Balken mit einem elektrischen Servomotor gekoppelt. Dadurch ist die Menge des strömenden Mediums durch das Ventil hindurch einstellbar. An der Schubstange greift weiterhin eine Rückstellfeder an.

Die EP 0 230 849 A1 gibt ein Regelventil und ein Absperrventil an. Das Ventil weist einen entlang einer Achse verschieblichen Absperrkörper auf, der einen sich entlang der Achse erstreckenden Kolben aufweist. Der Kolben ist als geradverzahnte Zahnstange ausgeführt, welche mit einer Längsverzahnung eines weiteren Stabes in Kontakt steht. Durch eine Rotation dieses weiteren Stabes um seine Stabachse ist eine Verschiebung des Absperrkörpers in axialer Richtung erreichbar. Eine Rotation dieses Stabes erfolgt mittels einer weiteren Verzahnung am Ende dieses Stabes über einen Elektromotor.

Die DE 44 46 605 A1 gibt ein Ventil für eine Dampfturbine an. Dieses Ventil weist eine Ventilspindel mit einem daran angeordneten Dichtsitz auf. Die Ventilspindel ist über einen Elektromotor angetrieben, welcher über eine elektromagnetisch betätigte Kupplung mit der Ventilspindel verbunden ist. Für einen automatischen Selbstschluß des Ventils umfaßt dieses ein Tellerfedersystem.

Der Erfindung liegt daher die Aufgabe zugrunde, ein Ventil einer Turbine mit einem Stellantrieb anzugeben, mit dem bei besonders geringer Brandgefahr ein störungsfreier Betrieb gewährleistet ist.

Diese Aufgabe wird erfindungsgemäß gelöst durch ein Ventil einer Turbine mit einem Gehäuse, einem darin angeordneten Ventilsitz, einem Stellglied, durch welches die Öffnungsposition des Ventils einstellbar ist, und mit einem Stellantrieb zur Betätigung des Stellglieds, wobei der Stellantrieb einen Elektromotor und eine elektromagnetische Kupplung aufweist und das Stellglied über die Kupplung mit dem Elektromotor verbunden ist, wobei das Stellglied als Schubstange und die Kupplung als elektromagnetische Zahnkupplung ausgebildet ist.

Die Erfindung geht dabei von der Überlegung aus, daß der Stellantrieb zur Vermeidung einer Brandgefahr ölfrei ausgebildet sein sollte. Für eine ölfreie Ausgestaltung des Stellantriebes sollte ein grundsätzlich vom Hydraulikantrieb abweichendes Antriebskonzept für die Schubstange vorgesehen sein. Dazu kommt für einen besonders zuverlässigen Betrieb des Ventils, insbesondere im Hinblick auf die Anforderungen hinsichtlich Stellzeit und Stellkraft, ein Elektromotor in Betracht.

Die Zahnkupplung ist für eine Übertragung einer Kraft von über 150 kN, insbesondere etwa 200 kN, ausgelegt. Hierdurch ist gewährleistet, daß der Stellantrieb gegen eine entsprechende Federkraft einer Spannfeder von über 150 kN arbeitet.

Während einer Regelfunktion kann somit der Stellantrieb einen Weg von 200 mm innerhalb von ca. 1 s (0,2 m/s) durchlaufen. Wird der elektromechanische Antrieb, der Servomotor, abgekoppelt, so ist die Schubstange durch die Spannfeder in etwa 100 ms in die Schließlage verschiebbar. Hierbei kann im Mittel eine Schließgeschwindigkeit von 2 m/s auftreten, wobei die maximale Geschwindigkeit ca. 4 m/s betragen kann.

Zweckmäßigerweise ist der Elektromotor als drehzahlgesteuerter Synchronmotor ausgebildet. Ein derartiger Synchronmotor erlaubt, insbesondere in Verbindung mit einem Servoverstärker, eine hochgenaue Stellungsregelung mit einer Regelgenauigkeit von etwa 0.1mm bei einer Motorleistung bis zu etwa 30 kW. Der Servoverstäker wirkt dabei als Frequenzumformer und ermöglicht eine generelle oder positionsabhängige Reduktion des Motorstromes oder der Motordrehzahl. Durch eine geeignete Anpassung der Betriebsparameter können dabei alle praktisch benötigten Antriebsleistungen und Antriebsstellgeschwindigkeiten erbracht werden.

Zur Umsetzung der Drehbewegung des Elektromotors in eine zum Antrieb der Schubstange vorgesehene Linearbewegung ist die Schubstange zweckmäßigerweise über ein Zahnrad-Zahnstangensystem mit dem Elektromotor verbunden. Zur Anpassung der Motordrehzahl kann zudem ein Zahnradvorlegegetriebe oder ein anderes Getriebe vorgesehen sein.

Für eine besonders hohe Betriebssicherheit ist an der Schubstange des Stellantriebes zweckmäßigerweise eine Rückstellfeder angeordnet. Die Rückstellfeder ist dabei derart ausgebildet, daß ihre Federkraft bei fehlenden weiteren Krafteinflüssen auf die Schubstange grundsätzlich eine geschlossene Ventilstellung bewirkt. Der Elektromotor wirkt gegen die Rückstellkraft der Rückstellfeder, so daß das Ventil bei einem Stromausfall und einem daraus resultierenden Ausfall des Elektromotors automatisch geschlossen wird.

Das Zahnrad des Zahnrad-Zahnstangensystems ist während des Betriebes des Stellantriebes über die elektromagnetische Zahnkupplung kraftschlüssig mit der Antriebswelle des Elektromotors verbunden. Die Zahnkupplung umfaßt dabei eine Zahnscheibe mit einer Anzahl von Zähnen, die im Betriebsfall in eine entsprechende Anzahl von Ausnehmungen in einer Mitnehmerscheibe eingreifen. Zwischen der Zahnscheibe und der Mitnehmerscheibe ist dabei eine Feder derart angeordnet, daß sie durch ihre Federkraft ein Eingreifen der Zähne in die Ausnehmungen verhindert. Zum Herstellen der kraftschlüssigen Verbindung zwischen Zahnscheibe und Mitnehmerscheibe und somit zwischen dem Zahnrad und der Antriebswelle des Elektromotors ist dabei ein Elektromagnet vorgesehen, dessen magnetische Rückhaltekraft im Betriebsfall die Federkraft übersteigt und die Zahnscheibe und die Mitnehmerscheibe somit zusammenhält. Durch eine derartige Anordnung ist erreicht, daß bei einem Stromausfall am Elektromagneten die kraftschlüssige Verbindung zwischen der Zahnscheibe und der Mitnehmerscheibe automatisch gelöst wird. In Verbindung mit der an der Schubstange angeordneten Rückstellfeder wird in diesem Fall das Ventil automatisch geschlossen. Ein derartiger Schließvorgang erfolgt in besonders kurzer Zeit, so daß ein derartiger Stellantrieb besonders hohe Sicherheitsanforderungen erfüllt.

Eine besonders lange Lebensdauer des Stellantriebes und insbesondere des ihm zugeordneten Ventils ist gewährleistet, indem für die Schubstange eine Endlagendämpfung vorgesehen ist. Diese bewirkt, daß ein Verschlußkegel des Ventils bei einem Schließvorgang mit nur begrenzter Geschwindigkeit in den Ventilsitz fährt. Eine Materialüberbeanspruchung bei einem Schließvorgang ist dabei sicher vermieden. Die Endlagendämpfung kann dabei beispielsweise als elektronische Endlagendämpfung in eine Steuereinheit des Elektromotors, insbesondere in den Servoverstärker, integriert sein. Für eine besonders hohe Betriebssicherheit auch bei einem Stromausfall ist aber vorteilhafterweise eine hydraulische Endlagendämpfung an der Schubstange angeordnet. Diese kann einstellbar sein, wobei sowohl der Dämpfungsgradient als auch der Dämpfungshub wählbar sein können. Die Endlagendämpfung setzt vorzugsweise bei etwa 10% des Öffnungswegs ein.

Der Stellantrieb eignet sich besonders für den Einsatz für ein Ventil einer Dampfturbine, insbesondere für ein Stellventil zum Einstellen eines Dampfstromes.

Die mit der Erfindung erzielten Vorteile bestehen insbesondere darin, daß durch den zum Antrieb der Schubstange vorgesehenen Elektromotor ein ölfreier Betrieb des Stellantriebes ermöglicht ist. Damit ist insbesondere beim Einsatz in einer Dampfturbine die Brandgefahr besonders gering. Die erforderlichen Brandschutzmaßnahmen sind bei Verwendung eines derartigen Stellantriebes daher besonders gering. Zudem ist der Stellantrieb in einer beliebigen Einbaulage installierbar. Der Elektromotor ist mittels einer geeigneten Ansteuerung auf besonders einfache Weise an verschiedenartige Anforderungen anpaßbar, so daß der Stellantrieb besonders flexibel ist. Die Komponenten des Stellantriebes, insbesondere der Elektromotor und die elektromagnetische Zahnkupplung, sind mit einfachen Mitteln ausführbar und somit besonders wartungsfreundlich.

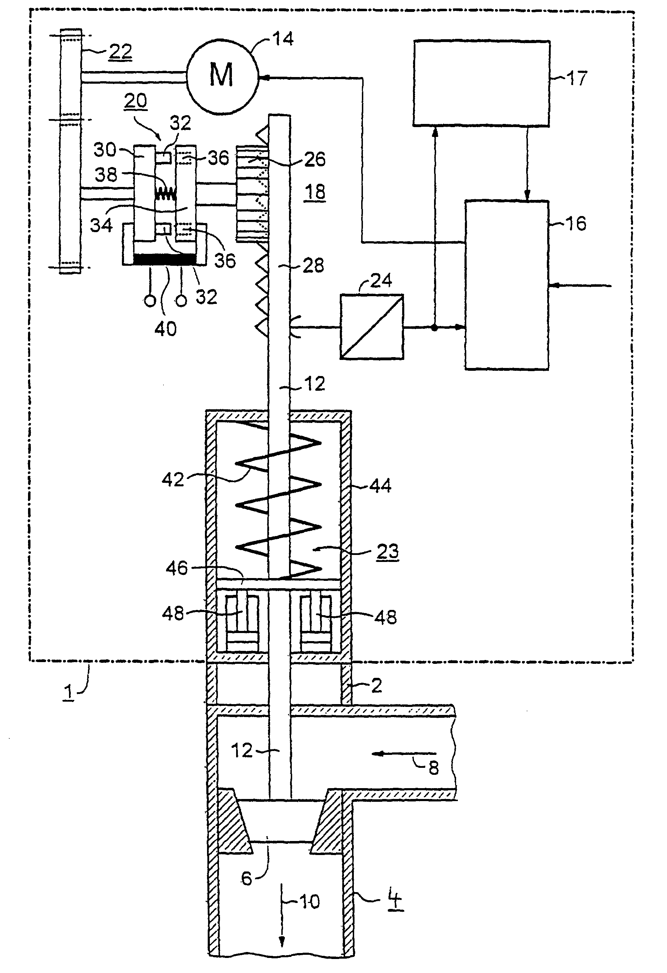

Ein Ausführungsbeispiel der Erfindung wird anhand einer Zeichnung näher erläutert. Darin zeigt die Figur schematisch einen Stellantrieb für ein Ventil einer Dampfturbine.

Der Stellantrieb 1 gemäß der Figur ist über ein Übergangsstück 2 mit einem Ventil 4 einer nicht näher dargestellten Dampfturbine verbunden. Die Öffnungsposition des als Stellventil für einen Dampfstrom vorgesehenen Ventils 4 ist durch die Position seines Ventilkegels 6 definiert. Durch Variation der Position des Ventilkegels 6, der in der Figur in Schließstellung gezeigt ist, ist ein durch die Pfeile 8 und 10 angedeuteter Durchfluß des Dampfstromes durch das Ventil 4 einstellbar. Die Position des Ventilkegels 6 und damit die Öffnungsposition des Ventils 4 ist mittels einer mit dem Ventilkegel 6 verbundenen Schubstange 12 des Stellantriebes 1 einstellbar.

Der Stellantrieb 1 umfaßt einen Elektromotor 14, der zum Antrieb der Schubstange 12 vorgesehen ist. Der Elektromotor 14 ist dabei als drehzahlgesteuerter Synchronmotor ausgebildet und über einen Servoverstärker 16 ansteuerbar. Der Servoverstärker 16 ist eingangsseitig mit einem Öffnungsregler 17 verbunden, der einen Stellwert für den Elektromotor 14 vorgibt. Die Schubstange 12 ist über ein Zahnrad-Zahnstangensystem 18 und über eine elektromagnetische Zahnkupplung 20 sowie über ein Getriebe 22 mit dem Elektromotor 14 verbunden. An der Schubstange 12 sind weiterhin ein Rückhalte-Federsystem 23 sowie ein Positionsmeßfühler 24 angeordnet. Der Positionsmeßfühler 24 ist dabei zur Messung eines Positions-Istwertes der Schubstange 12 vorgesehen und gibt diesen als weitere Eingangsgröße an den Öffnungsregler 17 weiter.

Das Zahnrad-Zahnstangensystem 18 ist zur Umformung der Drehbewegung des Elektromotors 14 in eine zum Antrieb der Schubstange 12 erforderliche Linearbewegung vorgesehen. Dazu umfaßt das Zahnrad-Zahnstangensystem 18 ein Zahnrad 26, das in geeigneter Weise mit einem als Zahnstange ausgebildeten Ende 28 der Schubstange 12 verzahnt ist. Das Getriebe 22 ist dabei zur Grobanpassung der Drehzahl des Elektromotors 14 an die Auslegung des Zahnrad-Zahnstangensystems 18 vorgesehen.

Für eine besonders hohe Betriebssicherheit des Stellantriebes 1 ist die elektromagnetische Zahnkupplung 20 zwischen das Getriebe 22 und das Zahnrad-Zahnstangensystem 18 geschaltet. Die elektromagnetische Zahnkupplung 20 ist dazu derart ausgelegt, daß ein etwaiger Stromausfall zu einer Kraft-entkopplung zwischen dem Elektromotor 14 und der Schubstange 12 führt. Die Zahnkupplung 20 umfaßt eine Zahnscheibe 30 mit einer Anzahl von Zähnen 32. Weiterhin umfaßt die Zahnkupplung 20 eine Mitnehmerscheibe 34 mit einer der Anzahl der Zähne 32 entsprechenden Anzahl von Aussparungen 36. Die Zahnscheibe 30 und die Mitnehmerscheibe 34 sind dabei derart einander gegenüberliegend angeordnet, daß jeder Zahn 32 in jeweils eine Aussparung 36 eingreifen kann. Zwischen der Zahnscheibe 30 und der Mitnehmerscheibe 34 ist eine Feder 38 angeordnet, deren Federkraft die Zahnscheibe 30 und die Mitnehmerscheibe 34 derart weit auseinanderhält, daß die Zähne 32 gerade nicht in die Aussparungen 36 eingreifen. Dieser in der Figur gezeigte Zustand entspricht dem ausgekuppelten Zustand.

Zur Herstellung des Betriebszustandes oder des eingekuppelten Zustandes der Zahnkupplung 20 umfaßt diese weiterhin ein Elektromagnetsystem 40, dessen magnetische Rückhaltekraft die Federkraft der Feder 38 übersteigt und somit die Zahnscheibe 30 und die Mitnehmerscheibe 34 derart in Kontakt hält, daß über die in die Aussparungen 36 eingreifenden Zähne 32 eine kraftschlüssige Verbindung zwischen der Zahnscheibe 30 und der Mitnehmerscheibe 34 entsteht. Zur Aufrechterhaltung der kraftschlüssigen Verbindung ist dabei in der Art einer aktiven Komponente ein Stromfluß durch das Elektromagnetsystem 40 erforderlich. Durch eine derartige Anordnung ist erreicht, daß bei einem Stromausfall ein automatisches Auskuppeln der Zahnkupplung 20 gewährleistet ist.

Aus Gründen der Betriebssicherheit für den Stellantrieb 1 und somit auch für das von diesem antreibbare Ventil 4 ist weiterhin an der Schubstange 12 das Rückhaltefedersystem 23 angeordnet. Dieses umfaßt eine Rückhaltefeder 42, die in einem Gehäuse 44 angeordnet ist und auf eine an der Schubstange 12 befestigte Druckplatte 46 wirkt. Der Stellantrieb 1 ist dabei derart ausgelegt, daß die Federkraft der Rückhaltefeder 42 ein Schließen des Ventils 4 bewirkt. Der Elektromotor 14 wirkt für eine Öffnung des Ventils 4 gegen die Federkraft der Rückhaltefeder 42. Bei einem Stromausfall und einer damit verbundenen Unterversorgung des Elektromotors 14 ist somit ein automatischer Selbstschluß des Ventils 4 gewährleistet. Insbesondere in Kombination mit der elektromagnetischen Zahnkupplung 20, die bei einem Stromausfall die kraftschlüssige Verbindung zwischen dem Elektromotor 14 und der Schubstange 12 löst, ist dabei ein zuverlässiger Selbstschluß des Ventils 4 bei nur geringer Beanspruchung seiner Komponenten oder der Komponenten des Stellantriebes 1 gewährleistet. Für einen Schaltvorgang in die Schließstellung des Ventils 4 ist dabei in der Art herkömmlicher Ventile die Parametrierung der Rückhaltefeder 42 relevant. Der Stellantrieb 1 gemäß dem Ausführungsbeispiel weist eine Verzugszeit von etwa 30ms und eine Stellzeit von etwa 100ms auf.

Der Elektromotor 14 ist im Ausführungsbeispiel für eine Motorleistung von bis zu 30 kW ausgelegt. In Verbindung mit dem Servoverstärker 16, der als Frequenzumformer wirkt, weist der Elektromotor 14 in dieser Ausgestaltung eine Anregelzeit von etwa 10ms und eine Ausregelzeit von etwa 20ms auf. Mit einer derartigen Parametrierung, insbesondere mit der angegebenen Motorleistung, ist der Elektromotor 14 in der Lage, eine als Rückhaltefeder 42 vorgesehene Feder mit einer Federkraft von etwa 200kN über einen Stellungshub von etwa 260mm innerhalb einer Stellzeit von etwa 2s zu spannen. In dieser Ausgestaltung ist der Stellantrieb 1 somit in besonderer Weise zum Antrieb des Ventils 4 geeignet. Je nach Anforderung der zugrundeliegenden Ventilkonfiguration kann aber auch eine andere Auslegung hinsichtlich der Motorleistung und der Parametrierung des Servoverstärkers 16 vorgesehen sein. Insbesondere der Servoverstärker 16 ermöglicht zudem, den Motorstrom und/oder die Motordrehzahl des Elektromotors 14 im Bedarfsfall generell oder ortsabhängig zu reduzieren. Somit können durch eine geeignete Parametrierung des Servoverstärkers 16 alle in der Praxis benötigten Antriebsleistungen und Antriebsstellgeschwindigkeiten des Stellantriebes 1 vorgegeben werden.

Für eine besonders lange Lebensdauer insbesondere des Ventilkegels 6 ist für die Schubstange 12 des Stellantriebes 1 eine Endlagendämpfung vorgesehen. Die Endlagendämpfung bewirkt dabei, daß die Schubstange 12 beim Schließen des Ventils 4 in der Endphase des Schließvorganges mit nur geringen Schließgeschwindigkeiten bewegt wird. Auf diese Weise ist sichergestellt, daß der Ventilkegel 6 mit einer nicht zu hohen Geschwindigkeit in seinen Ventilsitz fährt. Die Endlagendämpfung kann dabei elektronisch ausgeführt und beispielsweise in den Servoverstärker 16 integriert sein. Gemäß dem Ausführungsbeispiel ist jedoch eine mechanische Endlagendämpfung vorgesehen. Dazu ist eine Anzahl von Dämpferelementen 48 in das Gehäuse 44 des Rückhaltefedersystems 23 integriert. Jedes Dämpferelement 48 ist dabei in der Art einer Stoßdämpfers als hydraulischer Endlagendämpfer ausgeführt. Der Dämpfungsgradient und der Dämpfungshub jedes Dämpferelementes 48 sind einstellbar.

## Patentansprüche

1. Ventil (4) einer Turbine mit einem Gehäuse (44, einem darin angeordneten Ventilsitz, einem Stellglied (12) durch welches die Öffnungsposition des Ventils (4) einstellbar ist, und mit einem Stellantrieb (1) zur Betätigung des Stellglieds (12), wobei der Stellantrieb (1) einen Elektromotor (14) und eine elektromagnetische Kupplung (20) aufweist und das Stellglied (12) über die Kupplung (20) mit dem Elektromotor (14) verbunden ist,
**dadurch gekennzeichnet**, daβ das Stellglied als Schubstange (12) ausgebildet ist und die Kupplung als elektromagnetische Zahnkupplung (20).

2. Ventil (4) nach Anspruch 1, bei dem der Elektromotor (14) als drehzahlgesteuerter Synchronmotor ausgebildet ist.

3. Ventil (4) nach Anspruch 1 oder 2, bei dem der Elektromotor (14) über einen Servoverstärker (16) ansteuerbar ist.

4. Ventil (4) nach einem der Ansprüche 1 bis 3, bei dem die Schubstange (12) über ein Zahnrad-Zahnstangensystem (18) mit dem Elektromotor (14) verbunden ist.

5. Ventil (4) nach einem der Ansprüche 1 bis 4, bei dem an der Schubstange (12) ein Rückstellfedersystem (23) angeordnet ist.

6. Ventil (4) nach einem der Ansprüche 1 bis 5, bei dem die Zahnkupplung (20) für eine Kraftübertragung von über 150 kN, insbesondere etwa 200 kN, ausgelegt ist.

7. Ventil (4) nach einen der Ansprüche 1 bis 6, für dessen Schubstange (12) eine Endlagendämpfung (48) vorgesehen ist.

8. Ventil (4) nach Anspruch 7, bei dem an der Schubstange (12) eine hydraulische Endlagendämpfung angeordnet ist.

9. Dampfturbine, an der ein Stellventil (4) zum Einstellen eines Dampfstromes nach einem der Ansprüche 1 bis 8 vorgesehen ist.

## Claims

1. Valve (4) of a turbine, having a housing (44), a valve seat arranged therein, a final control element (12), by means of which the opening position of the valve (4) can be set, and an actuator (1) for actuating the final control element (12), the actuator (1) having an electric motor (14) and an electromagnetic coupling (20), and the final control element (12) being connected to the electric motor (14) via the coupling (20), **characterized in that** the final control element is designed as a push rod (12), and the coupling is designed as an electromagnetic toothed coupling (20).

2. Valve (4) according to Claim 1, in which the electric motor (14) is designed as a speed-controlled synchronous motor.

3. Valve (4) according to Claim 1 or 2, in which the electric motor (14) can be activated via a servo amplifier (16).

4. Valve (4) according to one of Claims 1 to 3, in which the push rod (12) is connected to the electric motor (14) via a rack-and-pinion system (18).

5. Valve (4) according to one of Claims 1 to 4, in which a restoring spring system (23) is arranged on the push rod (12).

6. Valve (4) according to one of Claims 1 to 5, in which the toothed coupling (20) is designed for a force transmission of over 150 kN, in particular about 200 kN.

7. Valve (4) according to one of Claims 1 to 6, for the push rod (12) of which an end-position damping means (48) is provided.

8. Valve (4) according to Claim 7, in which a hydraulic end-position damping means is arranged on the push rod (12).

9. Steam turbine on which a control valve (4) for setting a steam flow according to one of Claims 1 to 8 is provided.

## Revendications

1. Vanne (4) de turbine, comportant un boîtier (44), un siège de vanne disposé dans ce boîtier, un organe (12) de réglage qui permet de régler la position d'ouverture de la vanne (4), et un actionneur (1) pour actionner l'organe (12) de réglage, l'actionneur (1) comportant un moteur (14) électrique et un accouplement (20) électromagnétique, et l'organe (12) de réglage étant relié par l'intermédiaire de l'accouplement (20) au moteur (14) électrique,
**caractérisée en ce que** l'organe de réglage est réalisé sous forme de bielle (12) de poussée, et l'accouplement sous forme d'accouplement (20) électromagnétique à denture.

2. Vanne (4) suivant la revendication 1, suivant laquelle le moteur (14) électrique est réalisé sous forme de moteur synchrone à vitesse commandée.

3. Vanne (4) suivant la revendication 1 ou 2, suivant laquelle le moteur (14) électrique peut être asservi au moyen d'un amplificateur (16) d'asservissement.

4. Vanne (4) suivant l'une des revendications 1 à 3, suivant laquelle la bielle (12) de poussée est reliée au moteur (14) électrique par l'intermédiaire d'un système (18) à pignon et crémaillère.

5. Vanne (4) suivant l'une des revendications 1 à 4, suivant laquelle un système (23) de ressort de rappel est disposé sur la bielle (12) de poussée.

6. Vanne (4) suivant l'une des revendications 1 à 5, suivant laquelle l'accouplement (20) à denture est conçu pour une transmission de force de plus de 150 kN, notamment d'environ 200 kN.

7. Vanne (4) suivant l'une des revendications 1 à 6, suivant laquelle un amortissement (48) de position finale est prévu pour sa bielle (12) de poussée.

8. Vanne (4) suivant la revendication 7, suivant laquelle un amortissement hydraulique de position finale est disposé sur la bielle (12) de poussée.

9. Turbine à vapeur sur laquelle il est prévu une vanne (4) réglable destinée à régler un flux de vapeur suivant l'une des revendications 1 à 8.
